# EUROPÄISCHE PATENTSCHRIFT

(11) **EP 3 228 890 B1**
(45) Veröffentlichungstag und Bekanntmachung des Hinweises auf die Patenterteilung: **08.05.2019**
(21) Anmeldenummer: 17159759.4
(22) Anmeldetag: 08.03.2017
(51) Int. Cl.: F16C 19/06, H01R 13/648, H05F 3/04, F16C 41/00, H01R 39/64, F16C 19/52

(54) **ABLEITUNGSEINRICHTUNG UND VERFAHREN ZUR ABLEITUNG ELEKTROSTATISCHER LADUNGEN**
DIVERSION DEVICE AND METHOD FOR DIVERTING ELECTROSTATIC CHARGES
DISPOSITIF DE DÉRIVATION ET PROCÉDÉ DE DÉRIVATION DE CHARGES ÉLECTROSTATIQUES

(30) Priorität: 24.03.2016 DE 102016205049
(43) Veröffentlichungstag der Anmeldung: 11.10.2017
(73) Patentinhaber: Schunk Bahn- und Industrietechnik GmbH, 35435 Wettenberg (DE)
(72) Erfinder: PFEFFER, Daniel, 35325 Mücke (DE); THEIS, Lothar, 35649 Bischoffen (DE); BURKARD, Frank, 35279 Neustadt (DE)
(74) Vertreter: advotec.

(56) Entgegenhaltungen:
- EP-A1- 0 475 841
- DE-A1- 10 110 067
- DE-A1-102013 217 980
- DE-A1-102013 225 939
- DE-A1-102014 112 561
- DE-U1- 29 916 854
- JP-A- H11 218 143
- US-A1- 2014 334 758

## Beschreibung

Die Erfindung betrifft eine Ableitungseinrichtung für Wälzlager sowie ein Verfahren zur Ableitung elektrostatischer Ladungen an einem Wälzlager, umfassend einen biegeelastisch ausgebildeten Leiter, wobei der Leiter einen ersten Leiterabschnitt und einem zweiten Leiterabschnitt zur Ausbildung einer Kontaktanordnung an einem Wälzlager aufweist, wobei der erste Leiterabschnitt zur Anlage an einem ersten Lagerring und der zweite Leiterabschnitt zur Anlage an einem zweiten Lagerring des Wälzlagers ausgebildet ist, wobei mittels des Leiters eine elektrisch leitende Verbindung zwischen dem ersten Lagerring und dem zweiten Lagerring ausbildbar ist.

Aus der WO 2015/032989 A2 ist eine Ableitungseinrichtung für eine Welle bekannt, die einen aus einer Kohlstofffaseranordnung ausgebildeten biegeelastischen Leiter aufweist. Der Leiter ist an einem Halter befestigt, welcher relativ zu der Welle so angeordnet ist, dass der Leiter unter Ausbildung einer Vorspannung an der Welle anliegen kann. Dadurch wird es möglich eine elektrostatische Ladung der Welle über den Leiter abzuleiten. Die Welle kann folglich über den Leiter geerdet werden.

Nachteilig bei den bekannten Ableitungseinrichtungen ist, dass diese immer mit einem Halter benachbart der Welle verbaut werden müssen. Daher muss stets im Bereich der Welle ausreichend Bauraum für die Montage des Halters mit dem Leiter vorhanden sein. Je nach Art der Nutzung der Welle, insbesondere wenn die Welle mittels Wälzlager gelagert ist, können elektrostatische Ladungen auch von der Welle über die Wälzlager abgeleitet werden. Diese Ableitung von Strömen über die Wälzlager kann auch erfolgen, wenn eine Ableitungseinrichtung an der Welle, in einem Abstand von den Wälzlagern, angeordnet ist. Wie sich herausgestellt hat, führt ein Stromdurchgang durch ein Wälzlager mit der Nutzungsdauer zu einem fortschreitenden Verschleiß der Lagerringe und Wälzkörper. Insbesondere sind an den Lagerringen Anfressungen, sogenannte Pittings, oder auch Furchen zu beobachten.

Weiter ist bekannt, keramische bzw. keramisch beschichtete Kugeln als Isolator und/oder elektrisch leitende Fette in geschmierten Lagern zu verwenden, um vagabundierende Ströme abzuleiten. Ein Übergangswiderstand des Fettes wird dann so angepasst, dass ein Strom über das Fett und nicht mehr über die Kugeln abgeleitet wird. Nachteil dieser leitenden Fette sind deren geminderte Schmiereigenschaften, welche durch die Zugabe von leitenden Partikeln resultieren. Weiterhin können sich die leitende Fette durch hohe thermische Belastung und einen Stromdurchgang nachteilig verändern. Beispielsweise können auftretende vagabundierende Ströme durch große Temperaturschwankungen das Fett zersetzen und unbrauchbar machen. Auch eine Viskosität der Fette wird durch Zugabe der leitenden Partikel gemindert.

Aus der DE 10 2014 112 561 A1 ist eine Ableitungseinrichtung für ein Wälzlager bekannt, umfassend einen biegeelastisch ausgebildeten Leiter aus einer elektrisch leitfähigen Folie, wobei der Leiter einen ersten Leiterabschnitt und einen zweiten Leiterabschnitt zur Ausbildung einer Kontaktanordnung an dem Wälzlager aufweist, wobei der erste Leiterabschnitt zur Anlage an einem ersten Lagerring und der zweite Leiterabschnitt zur Anlage an einem zweiten Lagerring des Wälzlagers ausgebildet ist, wobei mittels des Leiters eine elektrisch leitende Verbindung zwischen dem ersten Lagerring und dem zweiten Lagerring ausbildbar ist.

Der vorliegenden Erfindung liegt daher die Aufgabe zugrunde, eine Ableitungseinrichtung sowie ein Verfahren zur Ableitung elektrostatischer Ladungen vorzuschlagen, die beziehungsweise das eine Standzeit von Wälzlagern verlängert.

Diese Aufgabe wird durch eine Ableitungseinrichtung mit den Merkmalen des Anspruchs 1, ein Wälzlager mit den Merkmalen des Anspruchs 21, ein Verfahren mit den Merkmalen des Anspruchs 22 und eine Verwendung einer Ableitungseinrichtung mit den Merkmalen des Anspruchs 23 gelöst.

Die erfindungsgemäße Ableitungseinrichtung für ein Wälzlager umfasst einen biegeelastisch ausgebildeten Leiter, wobei der Leiter einen ersten Leiterabschnitt und einen zweiten Leiterabschnitt zur Ausbildung einer Kontaktanordnung an einem Wälzlager aufweist, wobei der erste Leiterabschnitt zur Anlage an einem ersten Lagerring und der zweite Leiterabschnitt zur Anlage an einem zweiten Lagerring des Wälzlagers ausgebildet ist, wobei mittels des Leiters eine elektrisch leitende Verbindung zwischen dem ersten Lagerring und dem zweiten Lagerring ausbildbar ist, wobei der Leiter aus einer Kohlenstofffaseranordnung gebildet ist, wobei die Kohlenstofffaseranordnung des Leiters ein Fasergeflecht, Faserfilz und/oder Faservlies aufweist, das mit einer Beschichtung aus pyrolytisch abgeschiedenem Kohlenstoff versehen ist.

Der Leiter kann mit seinem ersten Leiterabschnitt dann mit einem ersten Kontaktbereich am ersten Lagerring und mit dem zweiten Lagerabschnitt an einem zweiten Kontaktbereich am zweiten Lagerring anliegen.

Dadurch wird eine elektrisch leitende Verbindung zwischen dem ersten Lagerring und dem zweiten Lagerring über den Leiter ausgebildet. Gleichzeitig wird es möglich Wälzkörper des Wälzlagers, die zwischen dem ersten Lagerring und dem zweiten Lagerring angeordnet sind, mit dem Leiter elektrisch zu überbrücken, so dass Ströme im Wesentlichen über den Leiter fließen und nicht über die Wälzkörper, wodurch die zuvor beschriebenen Beschädigungen der Lagerringe weitestgehend verhindert werden können. Da zumindest ein Lagerring regelmäßig in einem direktem Kontakt zu einer Welle steht, ist dann auch eine gesonderte Anordnung eines Leiters mittels eines Halters an einer Welle nicht mehr erforderlich, wodurch Bauraum eingespart werden kann.

Erfindungsgemäß ist der Leiter aus einer Kohlenstofffaseranordnung gebildet, wobei die Kohlenstofffaseranordnung des Leiters ein Fasergeflecht, Faserfilz und/oder Faservlies aufweist, das mit einer Beschichtung aus pyrolytisch abgeschiedenem Kohlenstoff versehen ist. Der Leiter kann somit im Wesentlichen aus Kohlenstofffasern ausgebildet sein, die ein Fasergeflecht, Faserfilz und/oder Faservlies ausbilden, welches mit pyrolytischem Kohlenstoff beschichtet ist. Durch die Beschichtung mit pyrolytischem Kohlenstoff können die Kohlenstofffasern in einer gewünschten Gestalt fixiert werden. Der Leiter kann durch Formgebung des Fasergeflechts oder durch Ausschneiden des Leiters aus einem Fasergeflecht, zum Beispiel aus einer Platte, ausgebildet werden. Der Leiter ist dann im Wesentlichen starr, aber dennoch ausreichend biegeelastisch ausgebildet. Ein Verschleiß der Lagerringe infolge der Kontaktanordnung kann vernachlässigt werden, da durch die Ausbildung des Leiters aus Kohlenstoffmaterial sich ein vorteilhafter Reibwert an dem jeweiligen Kontaktbereich ergibt.

Der erste Leiterabschnitt und der zweite Leiterabschnitt können über einen Verbindungsabschnitt einstückig miteinander verbunden sein. Der Verbindungsabschnitt kann dann einen Abstand oder Spalt zwischen dem ersten Lagerring und dem zweiten Lagerring, in dem die Wälzkörper angeordnet sind, überbrücken. Vorzugsweise kann der Leiter einstückig ausgebildet sein. Die Ableitungseinrichtung kann dann alleine durch den Leiter ausgebildet sein.

In dem Leiter kann eine Vorspannung ausgebildet sein, wobei der Leiter unter Ausbildung der Vorspannung zwischen dem ersten Lagerring und dem zweiten Lagerring anordbar sein kann. Insbesondere kann der Leiter in axialer und/oder radialer Richtung, relativ bezogen auf eine Wälzlagerachse, eine Vorspannung ausbilden. Der Leiter kann beispielsweise Abmessungen oder eine geometrische Gestalt aufweisen, die von den Abmessungen oder einer Form des ersten Lagerrings und/oder des zweiten Lagerrings abweichen. Die Ableitungseinrichtung kann beispielsweise um 10-50% größer als der erste Lagerring und/oder kleiner als der zweite Lagerring bei Radiallagern sein. Bei Axiallagern 10-50% größer als ein Lagerringabstand. Wenn dann der Leiter an dem ersten Lagerring und dem zweiten Lagerring angeordnet wird, kann der biegeelastische Leiter ein Stück weit verformt werden, so dass der Leiter unter einer Vorspannung an den jeweiligen Kontaktbereichen am ersten Lagerring und/oder zweiten Lagerring anliegt. Der Leiter wird dadurch an den ersten Lagerring und den zweiten Lagerring mit einer Anpresskraft gedrückt, wodurch eine besonders sichere elektrisch leitende Verbindung zwischen dem ersten Lagerring und dem zweiten Lagerring ausgebildet werden kann.

Das Wälzlager kann ein Axiallager sein. Unter einem Axiallager oder Drucklager wird hier ein Axial-Rillenkugellager, ein Axial-Zylinderrollenlager, ein Axial-Pendelrollenlager, ein Axial-Schrägrollenlager oder ein Axial-Kegelrollenlager verstanden.

Das Wälzlager kann auch ein Radiallager sein, und der Leiter einen Außenleiterabschnitt als ersten Leiterabschnitt und einen Innenleiterabschnitt als zweiten Leiterabschnitt zur Ausbildung der Kontaktanordnung an dem Radiallager aufweisen, wobei der Außenleiterabschnitt zur Anlage an einem Außenring als ersten Lagerring und der Innenleiterabschnitt zur Anlage an einem Innenring als zweiten Lagerring des Radiallagers ausgebildet sein kann, wobei mittels des Leiters die elektrisch leitende Verbindung zwischen dem Außenring und dem Innenring ausbildbar sein kann. Als ein Radiallager wird hier ein Rillenkugellager, ein Schrägkugellager, ein Vierpunktlager, ein Schulterkugellager, ein Pendelkugellager, ein Zylinderrollenlager, ein Kegelrollenlager, ein Tonnenrollenlager, ein Pendelrollenlager, ein Nadellager, ein Toroidalrollenlager, ein Kugelrollenlager oder ein Spannringlager verstanden.

Vorteilhaft ist es, wenn der Leiter zwischen dem Innenring und dem Außenring anordbar ausgebildet ist, wobei der Außenleiterabschnitt zur Anlage an einem Innenumfang des Außenrings und der Innenleiterabschnitt zur Anlage an einem Außenumfang des Innenrings ausgebildet sein kann. Dadurch, dass der Leiter vollständig zwischenliegend dem Innenring und dem Außenring anordbar ist, wird im Wesentlichen keinerlei Bauraum zur Anordnung der Ableitungseinrichtung benötigt. Dann kann beispielsweise auch ein bestehendes Wälzlager durch ein Wälzlager mit der Ableitungseinrichtung beziehungsweise dem Leiter einfach ersetzt werden. Der Leiter kann dann auch benachbart eines Wälzkörperkäfigs, oder bei zweireihigen Wälzlagern, mittig innerhalb des Lagers zwischen den Wälzkörperreihen, angeordnet sein. Darüber hinaus kann der Leiter besonders gut zwischenliegend dem Innenring und dem Außenring geklemmt werden.

Der Leiter kann zur Kontaktierung mit in einer Lagerkontaktebene angeordneten Kontaktbereichen des Innenrings und des Außenrings ausgebildet sein. Folglich kann der Leiter so ausgebildet sein, dass er vollkommen flach ausgebildet ist, das heißt, vollständig in der Lagerkontaktebene liegend. Die Kontaktbereiche des Innenrings und des Außenrings liegen dann auch innerhalb der Lagerkontaktebene. Der Leiter wird dadurch einfacher ausbildbar.

Vorteilhaft kann zumindest ein Leiterabschnitt in einer im Außenring oder im Innenring ausgebildeten radialen Nut beweglich eingesetzt sein. Ein Verrutschen des Leiters relativ zu einer Längsachse des Wälzlagers wird dadurch wirkungsvoll verhindert. Die Nut kann den Leiter auch soweit sichern, dass er nicht aus der Nut herausfallen kann. Je nach Breite der Nut und Breite des Leiters kann dieser auch beweglich in der Nut eingesetzt sein. Besonders vorteilhaft ist es, wenn das Wälzlager die Nut bereits aufweist. So sind Wälzlager bekannt, die Nuten zur Aufnahme von Sprengringen oder dergleichen aufweisen. Eine Gestalt und eine Breite des Leiters können daher bereits an eine derartige Nut angepasst sein. Prinzipiell kann der Leiter einen Leiterquerschnitt aufweisen, der quadratisch, rechteckig, elliptisch oder rund ist. Auch kann sich der Leiterquerschnitt, je nach Anforderung an eine Biegeelastizität oder eines elektrischen Widerstands, entlang einer Länge des Leiters verändern beziehungsweise verändert ausgebildet sein.

Der Leiter kann einen zumindest kreisbogenförmig ausgebildeten Leiterabschnitt aufweisen, der an dem Innenumfang und/oder dem Außenumfang anliegt. Dabei ist es ausreichend, wenn der Leiter nur abschnittsweise kreisbogenförmig ausgebildet ist. Ein Durchmesser des Kreisbogens kann ≥ einem Durchmesser des Innenumfangs oder ≤ einem Durchmesser des Außenumfangs sein. Ein derartiger Leiter kann leicht durch Wickeln um einen Dorn vorgeformt und damit einfach in größerer Stückzahl hergestellt werden. Weiter wird durch die kreisbogenförmige Ausbildung eine besonders große Anlagefläche bzw. ein Kontaktbereich am Innenumfang und/oder Außenumfang geschaffen, die für eine sichere Stromübertragung sorgt.

In einer Ausführungsform kann der Leiter U-förmig ausgebildet sein. Auch kann vorgesehen sein, den Leiter V-förmig auszubilden.

Der Leiter kann mit zwei Außenleiterabschnitten und einem Innenleiterabschnitt oder mit einem Außenleiterabschnitt und zwei Innenleiterabschnitten symmetrisch ausgebildet sein. So können zumindest drei Kontaktbereiche der Kontaktanordnung ausgebildet werden, woraus sich wiederum eine verbesserte Kontaktierung des Leiters an den Lagerringen ergibt.

Der Innenleiterabschnitt kann tangential am Außenumfang angeordnet sein. Insbesondere muss dann der Innenleiterabschnitt nicht zwangsläufig an eine Form des Außenumfangs bzw. einen Durchmesser des Innenrings angepasst sein.

Weiter kann der Leiter spiralförmig ausgebildet sein. Durch die spiralförmige Ausbildung des Leiters wird es möglich, einfach eine Vorspannung auszubilden, ohne dass besondere Genauigkeitsanforderungen hinsichtlich der Spiralform beachtet werden müssten.

Alternativ kann der Leiter auch wellenförmig ausgebildet sein. Dadurch wird es möglich, eine Vielzahl von Kontaktbereichen jeweils an Innenring und Außenring auszubilden und damit mehrere Leiterverbindungen von Innenring und Außenring mit nur einem Leiter auszubilden,

Folglich können zwei, bevorzugt drei, besonders bevorzugt vier oder mehr Leiterabschnitte zur Kontaktierung von jeweils voneinander in einer Umfangsrichtung angeordneten Kontaktbereichen ausgebildet sein. Die Kontaktbereiche können dabei äquidistant voneinander beabstandet sein.

Zumindest ein Leiterabschnitt kann so ausgebildet sein, dass der Leiterabschnitt aus dem Wälzlager herausführbar und mit einem weiteren Leiter kontaktierbar ist. Dann kann der Leiterabschnitt mit beispielsweise einem Kabel bzw. dem weiteren Leiter zur Erdung oder Abführung von Ladungen verbunden werden. So können auch hochfrequente Signale gezielt abgeführt werden. Eine Verwendung eines aus vielen feinen Einzeldrähten ausgebildeten Leiters ist vorteilhaft in Hinblick auf den bei steigenden Frequenzen größer werdenden Wechselspannungswiderstand.

Die Kohlenstofffaseranordnung kann als eine Umhüllung eines sich in Längsrichtung des Leiters erstreckenden unidirektionalen Faserstrangs ausgebildet sein. Der unidirektionale Faserstrang weist dann im Wesentlichen parallel zueinander verlaufende Filamente auf, so dass durch die Faserzwischenräume Kapillaren ausgebildet werden, welche die Ausnutzung von Kapillareffekten zum Abtransport von Fett aus den Kontaktbereichen ermöglichen.

Die Kohlenstofffaseranordnung kann einen rechteckigen, einen polygonalen oder einen elliptischen Querschnitt aufweisen, wobei die Kohlenstofffaseranordnung aus einem schlauchförmigen Geflecht, einem schlauchförmigen Band oder als ein Zuschnitt aus einer formstabilisierten Gewebeplatte hergestellt werden kann. Die formstabilisierte Gewebeplatte kann beispielsweise bereits mit pyrolytischem Kohlenstoff beschichtet sein.

Zur Erhöhung der Biegesteifigkeit des Leiters ist es vorteilhaft, wenn die Kohlenstofffaseranordnung mit einer Harzmatrix versehen ist.

Die Kohlenstofffaseranordnung kann mit einer Beschichtung zur Verringerung eines Reibungskoeffizienten versehen sein. Diese Beschichtung kann aus Molybdänsulfid, PTFE, Antimon etc. bestehen und die Kohlenstofffaseranordnung infiltrieren bzw. ausfüllen.

Die Beschichtung der Kohlenstofffaseranordnung bzw. des Fasergeflechts mit pyrolytisch abgeschiedenem Kohlenstoff kann durch Anwendung des CVI (Chemical Vapor Infiltration)-Verfahrens erfolgen, da dieses Verfahren nicht nur für die gewünschte Oberflächenbeschichtung, sondern darüber hinaus auch für die Ausbildung von Bindungskräften zwischen den einzelnen Filamenten des Fasergeflechtes sorgt.

Das erfindungsgemäße Wälzlager weist eine erfindungsgemäße Ableitungseinrichtung auf. Weitere vorteilhafte Ausführungsformen des Wälzlagers ergeben sich aus den Merkmalsbeschreibungen der auf den Vorrichtungsanspruch 1 rückbezogenen Unteransprüche.

Bei dem erfindungsgemäßen Verfahren zur Ableitung elektrostatischer Ladungen an einem Wälzlager mit einem Wälzlager und einem biegeelastisch ausgebildeten Leiter, wobei der Leiter mit einem ersten Leiterabschnitt und einem zweiten Leiterabschnitt ausgebildet wird, die eine Kontaktanordnung an dem Wälzlager ausbilden, wobei der erste Leiterabschnitt an einem ersten Lagerring und der zweite Leiterschnitt an einem zweiten Lagerring des Wälzlagers angelegt wird, derart, dass mittels des Leiters eine elektrisch leitende Verbindung zwischen dem ersten Lagerring und dem zweiten Lagerring ausgebildet wird, wobei der Leiter aus einer Kohlenstofffaseranordnung ausgebildet wird, wobei die Kohlenstofffaseranordnung des Leiters ein Fasergeflecht, Faserfilz und/oder Faservlies aufweist, das mit einer Beschichtung aus pyrolytisch abgeschiedenem Kohlenstoff versehen wird. Die vorteilhaften Wirkungen des erfindungsgemäßen Verfahrens betreffend wird auf die Vorteilsbeschreibung der erfindungsgemäßen Ableitungseinrichtung verwiesen. Vorteilhafte Ausführungsformen des Verfahrens ergeben sich aus den Merkmalsbeschreibungen der auf den Vorrichtungsanspruch 1 rückbezogenen Unteransprüche.

Die erfindungsgemäße Ableitungseinrichtung wird erfindungsgemäß zur Herstellung eines Wälzlagers mit einem ersten Lagerring, einem zweiten Lagerring und zwischen den Lagerringen angeordneten Wälzkörpern verwendet, wobei mittels eines Leiters eine elektrisch leitende Verbindung zwischen dem ersten Lagerring und dem zweiten Lagerring ausgebildet ist. Vorteilhafte Ausführungsformen der Verwendung der Ableitungseinrichtung ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: ein Wälzlager mit einer ersten Ausführungsform einer Ableitungseinrichtung;
- **Fig. 2**: ein Wälzlager mit einer zweiten Ausführungsform einer Ableitungseinrichtung;
- **Fig. 3**: ein Wälzlager mit einer dritten Ausführungsform einer Ableitungseinrichtung;
- **Fig. 4**: ein Wälzlager mit einer vierten Ausführungsform einer Ableitungseinrichtung;
- **Fig. 5**: ein Wälzlager mit einer fünften Ausführungsform einer Ableitungseinrichtung;
- **Fig. 6**: ein Wälzlager mit einer sechsten Ausführungsform einer Ableitungseinrichtung;
- **Fig. 7**: ein Wälzlager mit einer siebten Ausführungsform einer Ableitungseinrichtung;
- **Fig. 8**: ein Wälzlager mit einer achten Ausführungsform einer Ableitungseinrichtung;
- **Fig. 9**: ein Wälzlager mit einer neunten Ausführungsform einer Ableitungseinrichtung;
- **Fig. 10**: ein Wälzlager mit einer zehnten Ausführungsform einer Ableitungseinrichtung;
- **Fig. 11**: ein Wälzlager mit einer elften Ausführungsform einer Ableitungseinrichtung;
- **Fig. 12**: ein Radialrillenkugellager mit einer zwölften Ausführungsform einer Ableitungseinrichtung in einer perspektivischen Ansicht;
- **Fig. 13**: eine dreizehnte Ausführungsform einer Ableitungseinrichtung in einer Draufsicht;
- **Fig. 14**: eine Schnittansicht der Ableitungseinrichtung aus Fig. 13 entlang einer Linie XIV-XIV;
- **Fig. 15**: ein Radialrillenkugellager mit einer Gewebeplatte in einer perspektivischen Ansicht;
- **Fig. 16**: das Radialrillenkugellager mit einer vierzehnten Ausführungsform einer Ableitungseinrichtung in einer perspektivischen Ansicht;
- **Fig. 17**: das Radialrillenkugellager mit einer fünfzehnten Ausführungsform einer Ableitungseinrichtung in einer perspektivischen Ansicht;
- **Fig. 18**: das Radialrillenkugellager mit einer sechzehnten Ausführungsform einer Ableitungseinrichtung in einer perspektivischen Ansicht.

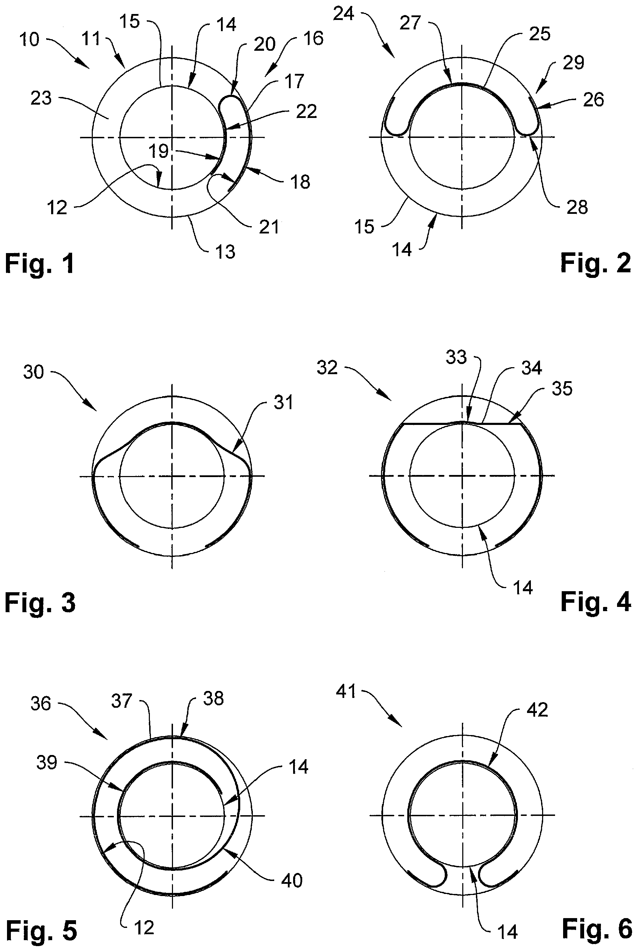

Die **Fig. 1** bis **9** zeigen jeweils verschiedene Ausführungsformen von Ableitungseinrichtungen in vereinfachten schematischen Darstellungen. Ein Wälzlager 10 ist hier jeweils als ein Radiallager 11 ausgebildet und lediglich mit einem Innenumfang 12 eines Außenrings 13 sowie einem Außenumfang 14 eines Innenrings 15 andeutungsweise ohne nähere Angabe von Wälzkörpern dargestellt.

So zeigt die **Fig. 1** eine erste Ausführungsform einer Ableitungseinrichtung 16, die aus einem Leiter 17 ausgebildet ist. Der Leiter 17 ist aus einer hier nicht näher dargestellten Kohlenstofffaseranordnung, welche ein Fasergeflecht aufweist, das mit einer Beschichtung aus pyrolytisch abgeschiedenem Kohlenstoff versehen ist, ausgebildet. Der Leiter 17 ist daher biegeelastisch ausgebildet. Insbesondere weist der Leiter 17 einen Außenleiterabschnitt 18 und einen Innenleiterabschnitt 19 auf. Der Außenleiterabschnitt 18 und der Innenleiterabschnitt 19 sind über einen Verbindungsabschnitt 20 einstückig miteinander verbunden. Der Außenleiterabschnitt 18 liegt an dem Innenumfang 12 des Außenrings 13 an und bildet einen Kontaktbereich 21 an dem Außenring 13 aus. Der Innenleiterabschnitt 19 liegt an dem Außenumfang 14 des Innenrings 15 an und bildet einen Kontaktbereich 22 des Innenrings aus. Der Außenleiterabschnitt 18 und einer Innenleiterabschnitt 19 sind jeweils kreisbogenförmig ausgebildet und über den ebenfalls kreisbogenförmig ausgebildeten Verbindungsabschnitt 20, der einen Lagerspalt 23 zwischen dem Außenring 13 und dem Innenring 15 überbrückt, verbunden. Der Verbindungsabschnitt 20 ist dabei so ausgebildet, dass eine Vorspannung zwischen dem Außenleiterabschnitt 18 und dem Innenleiterabschnitt 19 ausgebildet wird und folglich eine Andruckkraft jeweils auf die Kontaktbereiche 21 und 22 wirkt. Der Leiter kann so eine nahezu verschleißfreie, kostengünstig ausbildbare elektrisch leitende Verbindung zwischen dem Außenring 13 und dem Innenring 15 ausbilden.

Die **Fig. 2** zeigt eine zweite Ausführungsform einer Ableitungseinrichtung 24 mit einem Leiter 25, der zwei Außenleiterabschnitte 26, einen Innenleiterabschnitt 27 und zwei Verbindungsabschnitte 28 aufweist. Die Außenleiterabschnitte 26 sind jeweils an Enden 29 des Leiters 25 ausgebildet, wobei der Innenleiterabschnitt 27 zwischen den Verbindungsabschnitten 28 angeordnet ist. Insbesondere der Verbindungsabschnitt 28 ist kreisbogenförmig ausgebildet und liegt an dem Außenumfang 14 des Innenrings 15 vollständig an.

Eine dritte Ausführungsform einer Ableitungseinrichtung 30 zeigt die **Fig. 3****,** wobei im Unterschied zur **Fig. 2** hier Verbindungsabschnitte 31 geradförmig ausgebildet sind.

Eine vierte Ausführungsform einer Ableitungseinrichtung 32 zeigt die **Fig. 4****,** wobei hier ein Innenleiterabschnitt 33 eines Leiters 34 zusammen mit Verbindungsabschnitten 35 geradförmig ausgebildet ist und tangential am Außenumfang 14 anliegt.

Die **Fig. 5** zeigt eine fünfte Ausführungsform einer Ableitungseinrichtung 36 mit einem spiralförmig ausgebildeten Leiter 37. Ein Außenleiterabschnitt 38 ist im Wesentlichen an den Außenumfang 14, und am Innenleiterabschnitt 39 an den Innenumfang 12 angepasst, wobei ein Verbindungsabschnitt 40 den Außenleiterabschnitt 38 mit dem Innenleiterabschnitt 39 spiralförmig verbindet.

Die **Fig. 6** zeigt eine sechste Ausführungsform einer Ableitungseinrichtung, bei der im Unterschied zu der in **Fig. 2** gezeigten Ableitungseinrichtung ein Innenleiterabschnitt 42 den Außenumfang 40 zu einem überwiegenden Teil umfasst.

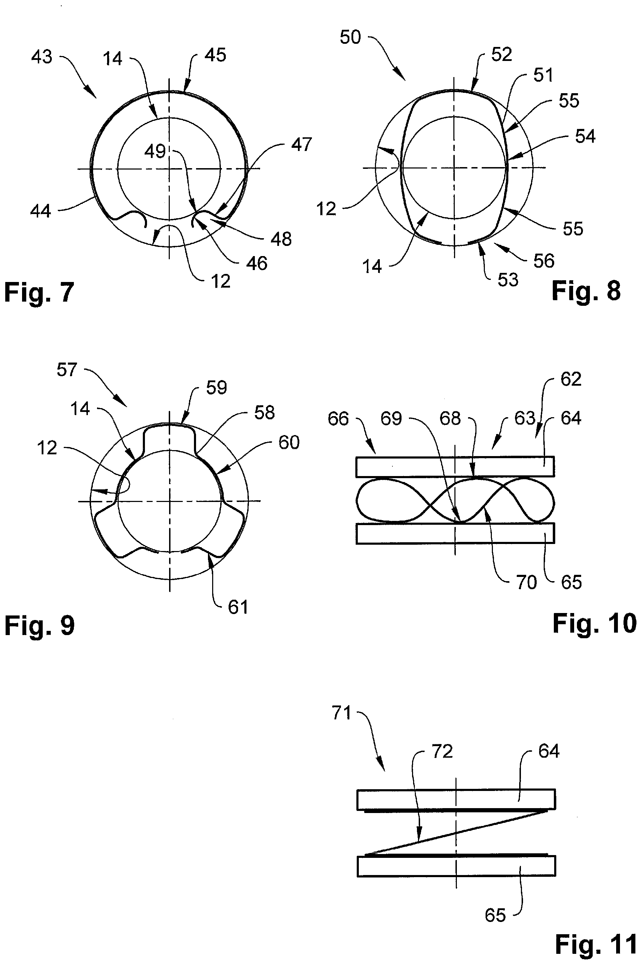

Die **Fig. 7** zeigt eine siebte Ausführungsform einer Ableitungseinrichtung 43 mit einem Leiter 44 der einen mittigen Außenleiterabschnitt 45 und zwei Innenleiterabschnitte 46 an jeweils Enden 48 des Leiters 44 aufweist. Die Innenleiterabschnitte 46 sind jeweils über einen Verbindungsabschnitt 47 mit dem Außenleiterabschnitt 45 verbunden. Der Außenleiterabschnitt 45 ist im Wesentlichen kreisbogenförmig ausgebildet und liegt am Innenumfang 12 an, der dabei von dem Außenleiterabschnitt 45 zu einem überwiegenden Teil bedeckt wird. Die Enden 48 beziehungsweise Innenleiterabschnitte 46 sind gekröpft ausgebildet und liegen an Kontaktpunkten 49 am Außenumfang 14 an. Die Ableitungseinrichtung 43 ist symmetrisch ausgebildet.

Die **Fig. 8** zeigt eine achte Ausführungsform einer Ableitungseinrichtung 50, mit einem Leiter 51, der einen Außenleiterabschnitt 52 sowie zwei weitere Außenleiterabschnitte 53 aufweist. Zwei Innenleiterabschnitte 54 sind jeweils über Verbindungsabschnitte 55 mit den Außenleiterabschnitten 52 beziehungsweise 53 verbunden. Insbesondere die Außenleiterabschnitte 53 sind jeweils an Enden 56 des Leiters 51 ausgebildet. Insbesondere die Außenleiterabschnitte 52 und 53 sind jeweils kreisbogenförmig ausgebildet und liegen an dem Innenumfang 12 an. Die Innenleiterabschnitte 54 liegenden tangential am Außenumfang 14 an.

Eine neunte Ausführungsform einer Ableitungseinrichtung 57 zeigt die **Fig. 9****,** wobei hier ein Leiter 58 im Wesentlichen wellenförmig ausgebildet ist. Der Leiter 58 bildet abwechselnd Außenleiterabschnitte 59, Innenleiterabschnitte 60 und diese verbindende Verbindungsabschnitte 61 aus. Die Außenleiterabschnitte 59 und die Innenleiterabschnitte 60 sind ihrerseits wieder kreisbogenförmig ausgebildet und im Wesentlichen an den Innenumfang 12 und den Außenumfang 14 angepasst.

Die **Fig. 10** und **11** zeigen ein Wälzlager 62, das als ein Axiallager 63 ausgebildet ist. Das Axiallager 63 ist hier mit einem ersten Lagerring 64 und einem zweiten Lagerring 65 lediglich schematisch und ohne Wälzkörper dargestellt.

Die **Fig. 10** zeigt eine zehnte Ausführungsform einer Ableitungseinrichtung 66 mit einem wellenförmig ausgebildeten Leiter 67, der infolge der wellenförmigen Anordnung des Leiters 67 jeweils erste Leiterabschnitte 68 aufweist, auf die zweite Leiterabschnitte 69 folgen, wobei die ersten Leiterabschnitte 68 mit den zweiten Leiterabschnitten 69 über Verbindungsabschnitte 70 verbunden sind. Der Leiter 67 ist endlos ausgebildet.

Die **Fig. 11** zeigt eine elfte Ausführungsform einer Ableitungseinrichtung 71, die einen spiralförmigen Leiter 72 umfasst. Der spiralförmige Leiter 72 ist in Art einer Spiralfeder ausgebildet und zwischen den Lagerringen 64 und 65 angeordnet.

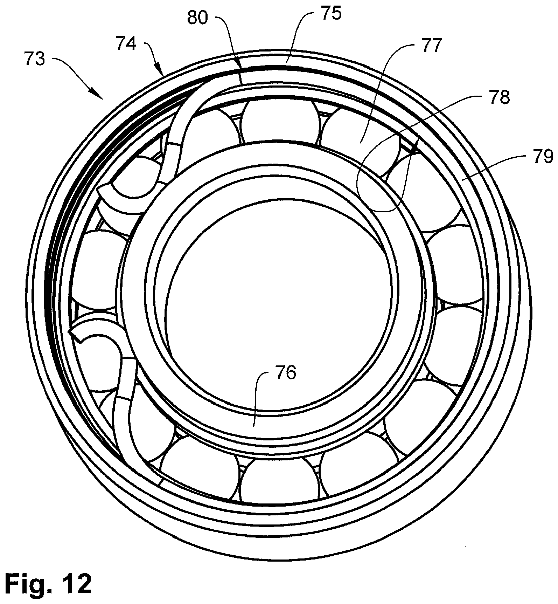

Die **Fig. 12** zeigt ein Wälzlager 73, welches als ein Rillenkugellager 74 ausgebildet ist. Zwischen einem Außenring 75 und einem Innenring 76 sind Kugeln 77 angeordnet. In dem Außenring 75 ist eine Nut 78 ausgebildet, in die eine als Leiter 79 ausgebildete Ableitungseinrichtung 80 eingesetzt ist. Die Ableitungseinrichtung 80 ist im Wesentlichen ähnlich der in **Fig. 7** dargestellten Ableitungseinrichtung ausgebildet.

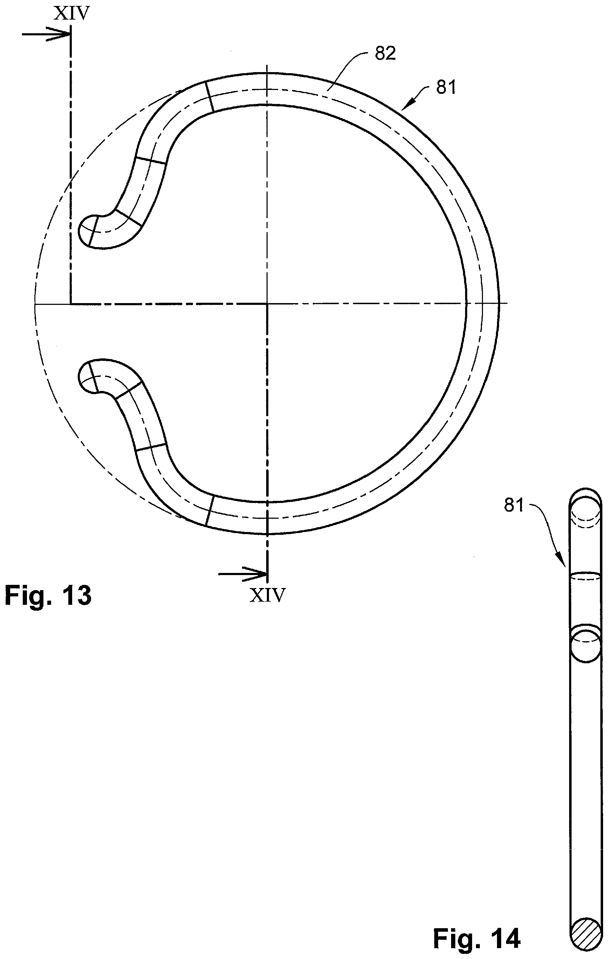

Eine Zusammenschau der **Fig. 13** und **14** zeigt eine Ableitungseinrichtung 81 in verschiedenen Ansichten. Ein Querschnitt eines Leiters 82 der Ableitungseinrichtung 81 ist kreisrund ausgebildet.

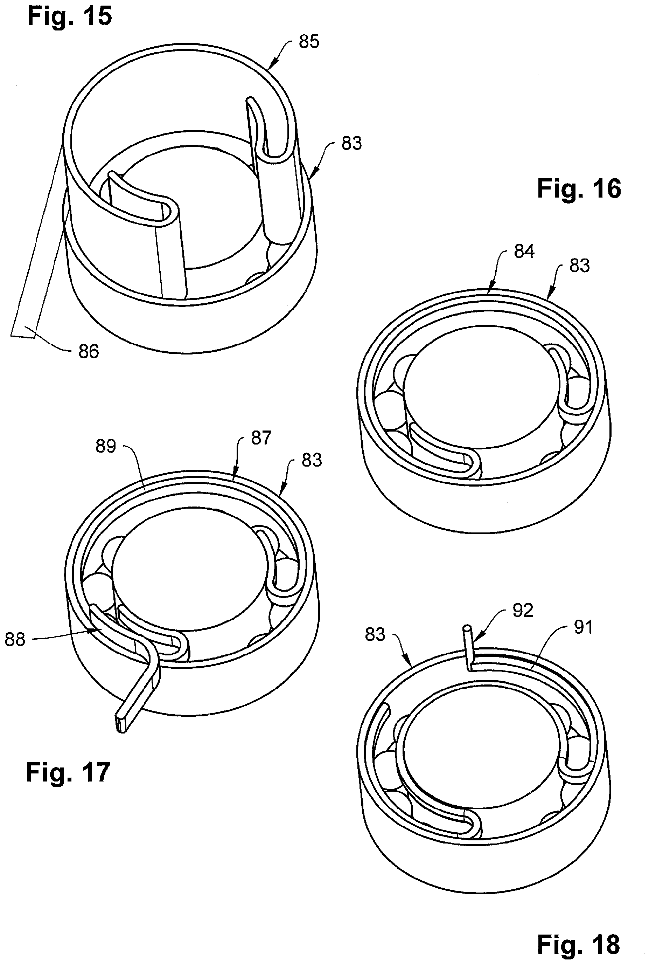

Eine Zusammenschau der **Fig. 15** und **16** zeigt ein Wälzlager 83 mit einer Ableitungseinrichtung 84. Die Ableitungseinrichtung 84 ist aus der in **Fig. 15** dargestellten formstabilisierten Gewebeplatte 85 aus Kohlenstofffasern ausgebildet, wobei die Ableitungseinrichtung 84 nach der Formstabilisierung der Gewebeplatte 85 durch eine Beschichtung mit pyrolytischem Kohlenstoff in der hier angedeuteten Ebene 86 von der Gewebeplatte 85 abgetrennt wird. Die **Fig. 17** zeigt das Wälzlager 83 mit einer Ableitungseinrichtung 87, wobei hier ein Außenleiterabschnitt 88 eines Leiters 89 der Ableitungseinrichtung 87 aus dem Wälzlager 83 herausgeführt ist. der Außenleiterabschnitt 88 kann so mit einem weiteren, hier nicht dargestellten Erdungsleiter kontaktiert werden.

Die **Fig. 18** zeigt das Wälzlager 83 mit einer Ableitungseinrichtung 90, wobei hier ein Leiter 91 aus einem metallischen Werkstoff ausgebildet ist, und einen Außenleiterabschnitt 92 ausbildet, der ebenfalls aus dem Wälzlager 83 herausgeführt ist.

## Patentansprüche

1. Ableitungseinrichtung (16, 24, 32, 36, 41, 43, 50, 57, 66, 71, 80, 81, 84, 87, 90) für ein Wälzlager (10, 62, 73, 83), umfassend einen biegeelastisch ausgebildeten Leiter (17, 25, 34, 37, 44, 51, 58, 67, 72, 79, 82, 89, 91), wobei der Leiter einen ersten Leiterabschnitt (18, 26, 38, 45, 52, 53, 59, 68, 88, 92) und einen zweiten Leiterabschnitt (19, 27, 33, 39, 42, 46, 54, 60, 69) zur Ausbildung einer Kontaktanordnung an einem Wälzlager aufweist, wobei der erste Leiterabschnitt zur Anlage an einem ersten Lagerring (13, 64, 75) und der zweite Leiterabschnitt zur Anlage an einem zweiten Lagerring (15, 65, 76) des Wälzlagers ausgebildet ist, wobei mittels des Leiters eine elektrisch leitende Verbindung zwischen dem ersten Lagerring und dem zweiten Lagerring ausbildbar ist,
**dadurch gekennzeichnet,**
**dass** der Leiter (17, 25, 34, 37, 44, 51, 58, 67, 72, 79, 82, 89) aus einer Kohlenstofffaseranordnung gebildet ist, wobei die Kohlenstofffaseranordnung des Leiters ein Fasergeflecht, Faserfilz und/oder Faservlies aufweist, das mit einer Beschichtung aus pyrolytisch abgeschiedenem Kohlenstoff versehen ist.

2. Ableitungseinrichtung nach Anspruch 1,
**dadurch gekennzeichnet,**
**dass** der erste Leiterabschnitt (18, 26, 38, 45, 52, 53, 59, 68, 88, 92) und der zweite Leiterabschnitt (19, 27, 33, 39, 42, 46, 54, 60, 69) über einen Verbindungsabschnitt (20, 28, 31, 35,40, 47, 55, 61, 70) einstückig miteinander verbunden sind.

3. Ableitungseinrichtung nach Anspruch 1 oder 2,
**dadurch gekennzeichnet,**
**dass** in dem Leiter (17, 25, 34, 37, 44, 51, 58, 67, 72, 79, 82, 89, 91) eine Vorspannung ausbildbar ist, wobei der Leiter unter Ausbildung der Vorspannung zwischen dem ersten Lagerring (13, 64, 75) und dem zweiten Lagerring (15, 65, 76) anordbar ist.

4. Ableitungseinrichtung nach einem der vorangehenden Ansprüche,
**dadurch gekennzeichnet,**
**dass** das Wälzlager (62) ein Axiallager (63) ist.

5. Ableitungseinrichtung nach einem der Ansprüche 1 bis 3,
**dadurch gekennzeichnet,**
**dass** das Wälzlager (10, 73, 83) ein Radiallager (11, 74) ist, und der Leiter (17, 25, 34, 37, 44, 51, 58, 79, 82, 89, 91) einen Außenleiterabschnitt (18, 26, 38, 45, 52, 53, 59, 88, 92) und einen Innenleiterabschnitt (19, 27, 33, 39, 42, 46, 54, 60) zur Ausbildung der Kontaktanordnung an dem Radiallager aufweist, wobei der Außenleiterabschnitt zur Anlage an einem Außenring (13, 75) und der Innenleiterabschnitt zur Anlage an einem Innenring (15, 76) des Radiallagers ausgebildet ist, wobei mittels des Leiters die elektrisch leitende Verbindung zwischen dem Außenring und dem Innenring ausbildbar ist.

6. Ableitungseinrichtung nach Anspruch 5,
**dadurch gekennzeichnet,**
**dass** der Leiter (17, 25, 34, 37, 44, 51, 58, 79, 82, 89, 91) zwischen dem Innenring (15, 76) und dem Außenring (13, 75) anordbar ausgebildet ist, wobei der Außenleiterabschnitt (18, 26, 38, 45, 52, 53, 59, 88, 92) zur Anlage an einem Innenumfang (12) des Außenrings und der Innenleiterabschnitt (19, 27, 33, 39, 42, 46, 54, 60) zur Anlage an einem Außenumfang (14) des Innenrings ausgebildet ist.

7. Ableitungseinrichtung nach Anspruch 5 oder 6,
**dadurch gekennzeichnet,**
**dass** der Leiter (17, 25, 34, 37, 44, 51, 58, 79, 82, 89, 91) zur Kontaktierung mit in einer Lagerkontaktebene angeordneten Kontaktbereichen (21, 22, 49) des Innenrings (15, 76) und des Außenrings (13, 75) ausgebildet ist.

8. Ableitungseinrichtung nach einem der Ansprüche 5 bis 7,
**dadurch gekennzeichnet,**
**dass** zumindest ein Leiterabschnitt (18, 19, 26, 27, 33, 38, 39, 42, 45, 46, 52, 53, 54, 59, 60, 88, 92) in einer im Außenring (13, 75) oder im Innenring (15, 76) ausgebildeten radialen Nut (78) beweglich eingesetzt ist.

9. Ableitungseinrichtung nach einem der Ansprüche 5 bis 8,
**dadurch gekennzeichnet,**
**dass** der Leiter (17, 25, 34, 37, 44, 51, 58, 79, 82, 89, 91) einen zumindest kreisbogenförmig ausgebildeten Leiterabschnitt (18, 19, 26, 27, 38, 39, 42, 45, 46, 52, 53, 59, 60, 88, 92) aufweist, der an dem Innenumfang (12) und/oder Außenumfang (14) anliegt.

10. Ableitungseinrichtung nach einem der Ansprüche 5 bis 9
**dadurch gekennzeichnet,**
**dass** der Leiter (17, 27, 34, 51, 89, 91) U-förmig oder V-förmig ausgebildet ist.

11. Ableitungseinrichtung nach einem der Ansprüche 5 bis 10,
**dadurch gekennzeichnet,**
**dass** der Leiter (25, 34, 44, 51, 58, 79, 82, 89, 91) mit zwei Außenleiterabschnitten (26, 46, 52, 53, 59, 92) und einem Innenleiterabschnitt (27, 33, 42, 60) oder mit einem Außenleiterabschnitt (45, 59, 88) und zwei Innenleiterabschnitten (46, 54, 60) symmetrisch ausgebildet ist.

12. Ableitungseinrichtung nach einem der Ansprüche 5 bis 11,
**dadurch gekennzeichnet,**
**dass** der Innenleiterabschnitt (19, 27, 33, 39, 42, 46, 54, 60) tangential am Außenumfang (14) angeordnet ist.

13. Ableitungseinrichtung nach einem der Ansprüche 5 bis 9,
**dadurch gekennzeichnet,**
**dass** der Leiter (37) spiralförmig ausgebildet ist.

14. Ableitungseinrichtung nach einem der Ansprüche 5 bis 12,
**dadurch gekennzeichnet,**
**dass** der Leiter (58) wellenförmig ausgebildet ist.

15. Ableitungseinrichtung nach einem der vorangehenden Ansprüche,
**dadurch gekennzeichnet,**
**dass** zwei, bevorzugt drei, besonders bevorzugt vier oder mehr Leiterabschnitte (18, 19, 26, 27, 38, 39, 42, 45, 46, 52, 53, 59, 60, 88, 92) zur Kontaktierung von jeweils voneinander in einer Umfangsrichtung angeordneten Kontaktbereichen (21, 22, 49) ausgebildet sind.

16. Ableitungseinrichtung nach einem der vorangehenden Ansprüche,
**dadurch gekennzeichnet,**
**dass** zumindest ein Leiterabschnitt (88, 92) aus dem Wälzlager (83) so herausgeführt ist, dass der Leiterabschnitt mit einem weiteren Leiter kontaktierbar ist.

17. Ableitungseinrichtung nach einem der vorangehenden Ansprüche,
**dadurch gekennzeichnet,**
**dass** die Kohlenstofffaseranordnung als eine Umhüllung eines sich in Längsrichtung des Leiters (17, 25, 34, 37, 44, 51, 58, 67, 72, 79, 82, 89) erstreckenden unidirektionalen Faserstrangs ausgebildet ist.

18. Ableitungseinrichtung nach einem der vorangehenden Ansprüche,
**dadurch gekennzeichnet,**
**dass** die Kohlenstofffaseranordnung einen rechteckigen, einen polygonalen oder einen elliptischen Querschnitt aufweist, wobei die Kohlenstofffaseranordnung aus einem schlauchförmigen Geflecht, einem schlauchförmigen Band oder als ein Zuschnitt aus einer formstabilisierten Gewebeplatte hergestellt wird.

19. Ableitungseinrichtung nach einem der vorangehenden Ansprüche,
**dadurch gekennzeichnet,**
**dass** die Kohlenstofffaseranordnung mit einer Harzmatrix versehen ist.

20. Ableitungseinrichtung nach einem der vorangehenden Ansprüche,
**dadurch gekennzeichnet,**
**dass** die Kohlenstofffaseranordnung mit einer Beschichtung zur Verringerung eines Reibungskoeffizienten versehen ist.

21. Wälzlager,
**dadurch gekennzeichnet,**
**dass** das Wälzlager (10, 62, 73, 83) eine Ableitungseinrichtung (16, 24, 32, 36, 41, 43, 50, 57, 66, 71, 80, 81, 84, 87, 90) nach einem der vorangehenden Ansprüche umfasst.

22. Verfahren zur Ableitung elektrostatischer Ladungen an einem Wälzlager, mit einem Wälzlager (10, 62, 73), und einem biegeelastisch ausgebildeten Leiter (17, 25, 34, 37, 44, 51, 58, 67, 72, 79, 82, 89, 91), wobei der Leiter mit einem ersten Leiterabschnitt (18, 26, 38, 45, 52, 53, 59, 68, 88, 92) und einem zweiten Leiterabschnitt (19, 27, 33, 39, 42, 46, 54, 60, 69) ausgebildet wird, die eine Kontaktanordnung an dem Wälzlager ausbilden, wobei der erste Leiterabschnitt an einem ersten Lagerring (13, 64, 75) und der zweite Leiterabschnitt an einem zweiten Lagerring (15, 65, 76) des Wälzlagers angelegt wird, derart, dass mittels des Leiters eine elektrisch leitende Verbindung zwischen dem ersten Lagerring und dem zweiten Lagerring ausgebildet wird,
**dadurch gekennzeichnet,**
**dass** der Leiter (17, 25, 34, 37, 44, 51, 58, 67, 72, 79, 82, 89) aus einer Kohlenstofffaseranordnung ausgebildet wird, wobei die Kohlenstofffaseranordnung des Leiters ein Fasergeflecht, Faserfilz und/oder Faservlies aufweist, das mit einer Beschichtung aus pyrolytisch abgeschiedenem Kohlenstoff versehen wird.

23. Verwendung einer Ableitungseinrichtung (16, 24, 32, 36, 41, 43, 50, 57, 66, 71, 80, 81, 84, 87, 92) nach einem der Ansprüche 1 bis 20, zur Herstellung eines Wälzlagers (10, 62, 73, 83) mit einem ersten Lagerring (13, 64, 75), einem zweiten Lagerring (15, 65, 76) und zwischen den Lagerringen angeordneten Wälzkörpern (77), wobei mittels eines Leiters (17, 25, 34, 37, 44, 51, 58, 67, 72, 79, 82, 89, 91) eine elektrisch leitende Verbindung zwischen dem ersten Lagerring und dem zweiten Lagerring ausgebildet ist.

## Claims

1. A discharge device (16, 24, 32, 36, 41, 43, 50, 57, 66, 71, 80, 81, 84, 87, 90) for a rolling bearing (10, 62, 73, 83) comprising a flexurally elastic conductor (17, 25, 34, 37, 44, 51, 58, 67, 72, 79, 82, 89, 91), said conductor comprising a first conductor section (18, 26, 38, 45, 52, 53, 59, 68, 88, 92) and a second conductor section (19, 27, 33, 39, 42, 46, 54, 60, 69) for forming a contact arrangement at a rolling bearing, said first conductor section being formed for contacting a first bearing ring (13, 64, 75) and said second conductor section being formed for contacting a second bearing ring (15, 65, 76) of the rolling bearing, an electrically conductive connection being able to be formed between the first bearing ring and the second bearing ring by means of the conductor,
**characterized in that**
the conductor (17, 25, 34, 37, 44, 51, 58, 67, 72, 79, 82, 89) is made of a carbon fiber arrangement, said carbon fiber arrangement of the conductor comprising a fiber braid, a fiber felt and/or a fiber mat, which is provided with a coating of pyrolytically deposited carbon.

2. The discharge device according to claim 1,
**characterized in that**
the first conductor section (18, 26, 38, 45, 52, 53, 59, 68, 88, 92) and the second conductor section (19, 27, 33, 39, 42, 46, 54, 60, 69) are connected to each other so as to form one piece via a connecting section (20, 28, 31, 35,40, 47, 55, 61, 70).

3. The discharge device according to claim 1 or 2,
**characterized in that**
an initial load can be formed in the conductor (17, 25, 34, 37, 44, 51, 58, 67, 72, 79, 82, 89, 91), said conductor being able to be arranged between the first bearing ring (13, 64, 75) and the second bearing ring (15, 65, 76) by forming the initial load.

4. The discharge device according to any one of the preceding claims,
**characterized in that**
the rolling bearing (62) is a thrust bearing (63).

5. The discharge device according to any one of the claims 1 to 3,
**characterized in that**
the rolling bearing (10, 73, 83) is a radial bearing (11, 74) and that the conductor (17, 25, 34, 37, 44, 51, 58, 79, 82, 89, 91) comprises an external conductor section (18, 26, 38, 45, 52, 53, 59, 88, 92) and an internal conductor section (19, 27, 33, 39, 42, 46, 54, 60) for forming the contact arrangement at the radial bearing, said external conductor section being formed to contact an outer ring (13, 75) and the internal conductor section being formed to contact an inner ring (15, 76) of the radial bearing, the electrically conductive connection between the outer ring and the inner ring being able to be formed by means of the conductor.

6. The discharge device according to claim 5,
**characterized in that**
the conductor (17, 25, 34, 37, 44, 51, 58, 79, 82, 89, 91) can be arranged between the inner ring (15, 76) and the outer ring (13, 75), said external conductor section (18, 26, 38, 45, 52, 53, 59, 88, 92) being formed to contact an inner circumference (12) of the outer ring and the internal conductor section (19, 27, 33, 39, 42, 46, 54, 60) being formed to contact an outer circumference (14) of the inner ring.

7. The discharge device according to claim 5 or 6,
**characterized in that**
the conductor (17, 25, 34, 37, 44, 51, 58, 79, 82, 89, 91) is formed for contacting contact areas (21, 22, 49) of the inner ring (15, 76) and the outer ring (13, 75), said contacting areas (21, 22, 49) being arranged in a bearing contact plane.

8. The discharge device according to any one of the claims 5 to 7,
**characterized in that**
at least one conductor section (18, 19, 26, 27, 33, 38, 39, 42, 45, 46, 52, 53, 54, 59, 60, 88, 92) is movably inserted in a radial groove (78) formed in the outer ring (13, 75) or in the inner ring (15, 76).

9. The discharge device according to any one of the claims 5 to 8,
**characterized in that**
the conductor (17, 25, 34, 37, 44, 51, 58, 79, 82, 89, 91) comprises a conductor section (18, 19, 26, 27, 38, 39, 42, 45, 46, 52, 53, 59, 60, 88, 92) formed at least arcuately, which rests on the inner circumference (12) and/or the outer circumference (14).

10. The discharge device according to anyone of the claims 5 to 9,
**characterized in that**
the conductor (17, 27, 34, 51, 89, 91) is U-shaped or V-shaped.

11. The discharge device according to any one of the claims 5 to 10,
**characterized in that**
the conductor (25, 34, 44, 51, 58, 79, 82, 89, 91) is symmetrical having two external conductor sections (26, 46, 52, 53, 59, 92) and an internal conductor section (27, 33, 42, 60) or having one external conductor section (45, 59, 88) and two internal conductor sections (46, 54, 60).

12. The discharge device according to any one of the claims 5 to 11,
**characterized in that**
the internal conductor section (19, 27, 33, 39, 42, 46, 54, 60) is arranged tangentially at the outer circumference (14).

13. The discharge device according to any one of the claims 5 to 9,
**characterized in that**
the conductor (37) is shaped helical.

14. The discharge device according to any one of the claims 5 to 12,
**characterized in that**
the conductor (58) is shaped like a wave.

15. The discharge device according to any one of the preceding claims,
**characterized in that**
two, preferably three, particularly preferably four or more, conductor sections (18, 19, 26, 27, 38, 39, 42, 45, 46, 52, 53, 59, 60, 88, 92) are formed for contacting contact areas (21, 22, 49), each of which are arranged at a distance to each other in a circumferential direction.

16. The discharge device according to any one of the preceding claims,
**characterized in that**
at least one conductor section (88, 92) emerges from the rolling bearing (83) in such a manner that the conductor section can be contacted to another conductor.

17. The discharge device according to any one of the preceding claims,
**characterized in that**
the carbon fiber arrangement is formed as a casing of a unidirectional fiber strand extending in the longitudinal direction of the conductor (17, 25, 34, 37, 44, 51, 58, 67, 72, 79, 82, 89).

18. The discharge device according to any one of the preceding claims,
**characterized in that**
the carbon fiber arrangement has a rectangular, a polygonal or an elliptic cross section, said carbon fiber arrangement being made of a tube-like braid, a tube-like band or formed as a cutting of a form-stable fabric panel.

19. The discharge device according to any one of the preceding claims,
**characterized in that**
the carbon fiber arrangement is provided with a resin matrix.

20. The discharge device according to any one of the preceding claims,
**characterized in that**
the carbon fiber arrangement is provided with a coating for reducing a coefficient of friction.

21. A rolling bearing,
**characterized in that**
the rolling bearing (10, 62, 73, 83) comprises a discharge device (16, 24, 32, 36, 41, 43, 50, 57, 66, 71, 80, 81, 84, 87, 90) according to any one of the preceding claims.

22. A method for discharging electrostatic charges at a rolling bearing having a rolling bearing (10, 62, 73) and a flexurally elastic conductor (17, 25, 34, 37, 44, 51, 58, 67, 72, 79, 82, 89, 91), said conductor being formed having a first conductor section (18, 26, 38, 45, 52, 53, 59, 68, 88, 92) and a second conductor section (19, 27, 33, 39, 42, 46, 54, 60, 69), which form a contact arrangement at a rolling bearing, said first conductor section being arranged at a first bearing ring (13, 64, 75) and the second conductor section being arranged at a second bearing ring (15, 65, 76) of the rolling bearing in such a manner that an electrically conductive connection can be formed between the first bearing ring and the second bearing ring by means of the conductor
**characterized in that**
the conductor (17, 25, 34, 37, 44, 51, 58, 67, 72, 79, 82, 89) is made of a carbon fiber arrangement, said carbon fiber arrangement of the conductor comprising a fiber braid, a fiber felt and/or a fiber mat, which is provided with a coating of pyrolytically deposited carbon.

23. A usage of a discharge device (16, 24, 32, 36, 41, 43, 50, 57, 66, 71, 80, 81, 84, 87, 92) according to any one of the claims 1 to 20 for producing a rolling bearing (10, 62, 73, 83) having a first bearing ring (13, 64, 75), a second bearing ring (15, 65, 76) and balls (77) arranged between the bearing rings, an electrically conductive connection being able to be formed between the first bearing ring and the second bearing ring by means of a conductor (17, 25, 34, 37, 44, 51, 58, 67, 72, 79, 82, 89, 91).

## Revendications

1. Dispositif de décharge (16, 24, 32, 36, 41, 43, 50, 57, 66, 71, 80, 81, 84, 87, 90) pour un roulement (10, 62, 73, 83), comprenant un conducteur élastique en flexion (17, 25, 34, 37, 44, 51, 58, 67, 72, 79, 82, 89, 91), le conducteur ayant une première section de conducteur (18, 26, 38, 45, 52, 53, 59, 68, 88, 92) et une seconde section de conducteur (19, 27, 33, 39, 42, 46, 54, 60, 69) pour la formation d'un agencement de contact sur un roulement, la première section de conducteur étant formée pour prendre appui sur une première bague de roulement (13, 64, 75) du roulement et la seconde section de conducteur étant formée pour prendre appui sur une seconde bague de roulement (15, 65, 76) du roulement, une connexion électriquement conductrice pouvant être formée entre la première bague de roulement et la seconde bague de roulement au moyen du conducteur,
**caractérisé en ce que**
le conducteur (17, 25, 34, 37, 44, 51, 58, 67, 72, 79, 82, 89) est formé d'un assemblage de fibres de carbone, l'assemblage de fibres de carbone du conducteur ayant une tresse en fibres, un feutre de fibres et/ou un mat de fibres qui est pourvu d'un revêtement de carbone déposé de façon pyrolytique.

2. Dispositif de décharge selon la revendication 1,
**caractérisé en ce que**
la première section de conducteur (18, 26, 38, 45, 52, 53, 59, 68, 88, 92) et la seconde section de conducteur (19, 27, 33, 39, 42, 46, 54, 60, 69) sont connectés d'un seul tenant par l'intermédiaire d'une section de connexion (20, 28, 31, 35,40, 47, 55, 61, 70).

3. Dispositif de décharge selon la revendication 1 ou 2,
**caractérisé en ce**
**qu'**une charge initiale peut être formée dans le conducteur (17, 25, 34, 37, 44, 51, 58, 67, 72, 79, 82, 89, 91), le conducteur pouvant être disposé entre la première bague de roulement (13, 64, 75) et la seconde bague de roulement (15, 65, 76) tout en formant la charge initiale.

4. Dispositif de décharge selon l'une quelconque des revendications précédentes,
**caractérisé en ce que**
le roulement (62) est un palier de butée (63).

5. Dispositif de décharge selon l'une quelconque des revendications 1 à 3,
**caractérisé en ce que**
le roulement (10, 73, 83) est un palier radial (11, 74), et le conducteur (17, 25, 34, 37, 44, 51, 58, 79, 82, 89, 91) a une section de conducteur extérieure (18, 26, 38, 45, 52, 53, 59, 88, 92) et une section de conducteur intérieure (19, 27, 33, 39, 42, 46, 54, 60) pour la formation de l'agencement de contact sur le palier radial, la section de conducteur extérieure étant formée pour prendre appui sur une bague extérieure (13, 75) du palier radial et la section de conducteur intérieure étant formée pour prendre appui sur une bague intérieure (15, 76) du palier radial, la connexion électriquement conductrice pouvant être formée entre la bague extérieure et la bague intérieure au moyen du conducteur.

6. Dispositif de décharge selon la revendication 5,
**caractérisé en ce que**
le conducteur (17, 25, 34, 37, 44, 51, 58, 79, 82, 89, 91) peut être disposé entre la bague intérieure (15, 76) et la bague extérieur (13, 75), la section de conducteur extérieur (18, 26, 38, 45, 52, 53, 59, 88, 92) étant formée pour prendre appui sur une circonférence intérieure (12) de la bague extérieure et la section de conducteur intérieur (19, 27, 33, 39, 42, 46, 54, 60) étant formée pour prendre appui sur une circonférence extérieure (14) de la bague intérieure.

7. Dispositif de décharge selon la revendication 5 ou 6,
**caractérisé en ce que**
le conducteur (17, 25, 34, 37, 44, 51, 58, 79, 82, 89, 91) est formé pour contacter des zones de contact (21, 22, 49) de la bague intérieure (15, 76) et de la bague extérieure (13, 75), lesdites zones de contact (21, 22, 49) étant disposées dans un plan de contact du palier.

8. Dispositif de décharge selon l'une quelconque des revendications 5 à 7,
**caractérisé en ce**
**qu'**au moins une section de conducteur (18, 19, 26, 27, 33, 38, 39, 42, 45, 46, 52, 53, 54, 59, 60, 88, 92) est insérée de façon mobile dans une rainure radiale (78) formée dans la bague extérieure (13, 75) ou dans la bague intérieure (15, 76).

9. Dispositif de décharge selon l'une quelconque des revendications 5 à 8,
**caractérisé en ce que**
le conducteur (17, 25, 34, 37, 44, 51, 58, 79, 82, 89, 91) a une section de conducteur (18, 19, 26, 27, 38, 39, 42, 45, 46, 52, 53, 59, 60, 88, 92) au moins en forme d'arc de cercle qui repose sur la circonférence intérieure (12) et/ou la circonférence extérieure (14).

10. Dispositif de décharge selon l'une quelconque des revendications 5 à 9,
**caractérisé en ce que**
le conducteur (17, 27, 34, 51, 89, 91) est formé en forme de U ou en forme de V.

11. Dispositif de décharge selon l'une quelconque des revendications 5 à 10,
**caractérisé en ce que**
le conducteur (25, 34, 44, 51, 58, 79, 82, 89, 91) est symétrique ayant deux sections de conducteur extérieures (26, 46, 52, 53, 59, 92) et une section de conducteur intérieure (27, 33, 42, 60) ou ayant une section de conducteur extérieure (45, 59, 88) et deux sections de conducteur intérieures (46, 54, 60).

12. Dispositif de décharge selon l'une quelconque des revendications 5 à 11,
**caractérisé en ce que**
la section de conducteur intérieure (19, 27, 33, 39, 42, 46, 54, 60) est disposée tangentiellement sur la circonférence extérieure (14).

13. Dispositif de décharge selon l'une quelconque des revendications 5 à 9,
**caractérisé en ce que**
le conducteur (37) est formé en hélice.

14. Dispositif de décharge selon l'une quelconque des revendications 5 à 12,
**caractérisé en ce que**
le conducteur (58) est formé ondulé.

15. Dispositif de décharge selon l'une quelconque des revendications précédentes,
**caractérisé en ce que**
deux, préférablement trois, de préférence particulière quatre ou plus sections de conducteur (18, 19, 26, 27, 38, 39, 42, 45, 46, 52, 53, 59, 60, 88, 92) sont formées pour contacter des zones de contact (21, 22, 49) qui sont disposées à une distance l'une de l'autre dans une direction circonférentielle.

16. Dispositif de décharge selon l'une quelconque des revendications précédentes,
**caractérisé en ce**
**qu'**au moins une section de conducteur (88, 92) émerge du roulement (83) de telle sorte que la section de conducteur peut être contactée à un autre conducteur.

17. Dispositif de décharge selon l'une quelconque des revendications précédentes,
**caractérisé en ce que**
l'assemblage de fibres de carbone est formé comme une enveloppe d'un toron de fibres unidirectionnel qui s'étend dans la direction longitudinale du conducteur (17, 25, 34, 37, 44, 51, 58, 67, 72, 79, 82, 89).

18. Dispositif de décharge selon l'une quelconque des revendications précédentes,
**caractérisé en ce que**
l'assemblage de fibres de carbone a une section transversale rectangulaire, polygonale ou elliptique, l'assemblage de fibres de carbone étant fabriqué à partir d'une tresse en forme de tube, d'un ruban en forme de tube ou comme une coupe d'un panneau de tissu de forme stable.

19. Dispositif de décharge selon l'une quelconque des revendications précédentes,
**caractérisé en ce que**
l'assemblage de fibres de carbone est pourvu d'une matrice de résine.

20. Dispositif de décharge selon l'une quelconque des revendications précédentes,
**caractérisé en ce que**
l'assemblage de fibres de carbone est pourvu d'un revêtement pour la réduction d'un coefficient de frottement.

21. Roulement,
**caractérisé en ce que**
le roulement (10, 62, 73, 83) comprend un dispositif de décharge (16, 24, 32, 36, 41, 43, 50, 57, 66, 71, 80, 81, 84, 87, 90) selon l'une quelconque des revendications précédentes.

22. Procédé pour la décharge de charges électrostatiques sur un roulement, comprenant un roulement (10, 62, 73) et un conducteur (17, 25, 34, 37, 44, 51, 58, 67, 72, 79, 82, 89, 91) élastique en flexion, le conducteur étant formé avec une première section de conducteur (18, 26, 38, 45, 52, 53, 59, 68, 88, 92) et une seconde section de conducteur (19, 27, 33, 39, 42, 46, 54, 60, 69) qui forment un agencement de contact sur le roulement, la première section de conducteur étant mise en contact avec une première bague de roulement (13, 64, 75) du roulement et la seconde section de conducteur étant mise en contact avec une seconde bague de roulement (15, 65, 76) du roulement de telle sorte qu'une connexion électriquement conductrice est formée entre la première bague de roulement et la seconde bague de roulement au moyen du conducteur
**caractérisé en ce que**
le conducteur (17, 25, 34, 37, 44, 51, 58, 67, 72, 79, 82, 89) est formé d'un assemblage de fibres de carbone, l'assemblage de fibres de carbone du conducteur ayant une tresse en fibres, un feutre de fibres et/ou un mat de fibres qui est pourvu d'un revêtement de carbone déposé de façon pyrolytique.

23. Utilisation d'un dispositif de décharge (16, 24, 32, 36, 41, 43, 50, 57, 66, 71, 80, 81, 84, 87, 92) selon l'une quelconque des revendications 1 à 20, pour la production d'un roulement (10, 62, 73, 83) comprenant une première bague de roulement (13, 64, 75), une seconde bague de roulement (15, 65, 76) et des corps de roulement (77) disposés entre les bagues de roulement, une connexion électriquement conductrice étant formée entre la première bague de roulement et la seconde bague de roulement au moyen d'un conducteur (17, 25, 34, 37, 44, 51, 58, 67, 72, 79, 82, 89, 91).
